# EUROPÄISCHE PATENTANMELDUNG

(11) **EP 0 881 120 A2**
(43) Veröffentlichungstag der Anmeldung: **02.12.1998**
(21) Anmeldenummer: 98109491.5
(22) Anmeldetag: 26.05.1998
(51) Int. Cl.: B60Q 1/076, H01C 10/14

(54) **Haltevorrichtung für ein verschiebbares Abgriffelement eines Potentiometers einer elektrischen Verstelleinrichtung zur Verstellung eines Reflektors eines Fahrzeugscheinwerfers**

(30) Priorität: 31.05.1997 DE 19722965
(71) Anmelder: Hella KG Hueck & Co., 59552 Lippstadt (DE)
(72) Erfinder: Stumpe, Gerhard, 59558 Lippstadt (DE); Stryschik, Dieter, 59558 Lippstadt (DE)

(57) **Zusammenfassung**

Haltevorrichtung für ein verschiebbares Abgriffelement (8) eines Potentiometers (7) einer elektrischen Verstelleinrichtung zur Verstellung eines Reflektors eines Fahrzeugscheinwerfers mit einem Halteelement (9), das an einem freien Endabschnitt eines längsverschieblich in einem Gehäuse gelagerten Achskörpers befestigt ist, wobei das Abgriffelement (8) durch das Halteelement (9) an einem umlaufenden Flächenabschnitt (29) eines Zahnrads (4) gehalten ist, und das Abgriffelement (8) in dem Halteelement einrastbar gehalten ist.

## Beschreibung

Die Erfindung betrifft eine Haltevorrichtung für ein verschiebbares Abgriffelement eines Potentiometers einer elektrischen Verstelleinrichtung zur Verstellung eines Reflektors eines Fahrzeugscheinwerfers mit einem Halteelement, das an einem freien Endabschnitt eines längsverschieblich in einem Gehäuse gelagerten Achskörpers befestigt ist, wobei das Abgriffelement durch das Halteelement an einem umlaufenden Flächenabschnitt eines Zahnrads gehalten ist.

Aus der DE 94 07 070 U1 ist eine Haltevorrichtung für ein verschiebbares Abgriffelement eines Potentiometers bekannt, die ein an einem freien Endabschnitt eines Achskörpers befestigtes Halteelement umfaßt. Das Halteelement weist einen zu dem umlaufenden Flächenabschnitt eines Zahnrads hin verlaufenden Abschnitt auf, wobei das Abgriffelement des Potentiometers zwischen dem Abschnitt und dem Flächenabschnitt des Zahnrades gehalten ist. Nachteilig an der bekannten Haltevorrichtung ist, daß das Halteelement erst nach Montage der das Potentiometer aufweisenden Leiterplatte an dem Achskörper arretiert werden kann. Hierzu ist eine relativ große Öffnung in der Leiterplatte erforderlich, damit das Halteelement angebracht werden kann.

Aufgabe der vorliegenden Erfindung ist es daher, eine Haltevorrichtung für ein verschiebbares Abgriffelement eines Potentiometers anzugeben, die eine einfache Montage und einen platzsparenden Aufbau einer elektrischen Verstelleinrichtung zur Verstellung eines Reflektors eines Fahrzeugscheinwerfers ermöglicht.

Diese Aufgabe wird erfindungsgemäß dadurch gelöst, daß das Abgriffelement in dem Halteelement einrastbar gehalten ist.

Dadurch, daß das Abgriffelement durch Einrastung in das Halteelement einführbar und in dieser Position gehalten ist, wird eine Arretierung des Halteelements auf dem Achskörper vor der Anbringung der Leiterplatte in dem Gehäuse ermöglicht. Die Leiterplatte braucht lediglich eine vergleichsweise kleine Öffnung aufweisen, durch die ein Montagewerkzeug zum Erfassen des Abgriffelements zuführbar ist, um ein anschließendes Einrasten des Abgriffselements zu ermöglichen.

Nach einer bevorzugten Ausführungsform der Erfindung weist das Halteelement zwei Rastelemente mit jeweils einer Schrägfläche auf, die sich von der vom Zahnrad abgekehrten Seite des Halteelements unter einem spitzen Winkel erstreckt. Die Schrägflächen laufen aufeinander zu und bilden so eine Einkerbung bzw. einen Spalt, so daß das Einrasten des Abgriffelements in einer vorgegebenen Ebene erfolgt.

Nach einer Weiterbildung der Erfindung weist die Schrägfläche mindestens zwei Schrägflächenabschnitte unterschiedlicher Länge auf, so daß zwei zueinander versetzt angeordnete Spaltabschnitte zwischen der Schrägfläche eines ersten Rastelements einerseits und der Schrägflache des zweiten Rastelements andererseits gebildet wird. Die dem Zahnrad zugekehrten Seiten der Rastelemente sind eben und auf einer gemeinsamen Ebene liegend ausgebildet. Durch den seitlichen Versatz des Spaltes in einer Radialebene wird verhindert, daß das Abgriffelement in der eingerasteten Position eine bestimmte Lage einnimmt. Der Querversatz des Spaltes verhindert ein Einhaken oder Verklemmen des Abgriffelementes in dem Spalt und ermöglicht somit, daß auf das Abgriffelement wirkende Querkräfte durch Bewegung desselben ausgeglichen werden können.

Der Versatz des Spaltes verläuft vorzugsweise in Umfangsrichtung des Halteelements.

Nach einer Weiterbildung der Erfindung sind an den Rastelementen an sich in axialer Richtung erstreckende Rastarme angeformt. Die Rastarme weisen in Montagerichtung verlaufende Stützstege auf, die während des Einrastvorgangs durch Anlage an den Flächenabschnitt des Zahnrads eine öffnende Bewegung der Rastelemente bewirken, so daß das Abgriffelement in die Einrastposition bewegt werden kann. Dadurch, daß die Erstreckung des Stützstegs in Richtung des Zahnrads größer ist als der Radius des Abgriffselements, wird die Öffnungsstellung der Rastelemente aufrechterhalten, bis das Abgriffselement mit seiner größten Quererstreckung den durch die Rastelemente gebildeten Spalt überwunden hat, so daß nachfolgend durch eine schnappende Bewegung der Rastelemente eine sichere Klemmung des Abgriffelements gewährleistet ist.

Nach einer weiteren Ausführungsform der Erfindung ist der Abstand zwischen dem Flächenabschnitt des Zahnrads und der dem Zahnrad zugekehrten Seite der Rastelemente kleiner als der Durchmesser des Abgriffselements. Hierdurch wird eine klemmende Halterung des Abgriffselements in der Einrastposition gewährleistet.

Nach einer Weiterbildung der Erfindung weist ein Ringelement des Halteelements nach innen abstehende Erhebungen auf, die mit korrespondierenden Befestigungsmitteln des Achskörpers in Eingriff gebracht werden können, so daß eine kraft- und/oder formschlüssige Verbindung zwischen dem Halteelement und dem Achskörper geschaffen wird. Vorteilhaft kann dadurch das auf dem Achskörper gelagerte Zahnrad nach Befestigung des Halteelements an dem freien Ende des Achskörpers axial gesichert werden.

Ein Ausführungsbeispiel der Erfindung wird nachfolgend anhand der Zeichnungen näher beschrieben.

Es zeigen:
- Fig. 1:: Einen Vertikalschnitt durch eine elektrische Verstellvorrichtung für einen Reflektor eines Fahrzeugscheinwerfers,
- Fig. 2.:: einen vertikalen Teilschnitt der elektrischen Verstellvorrichtung,
- Fig. 3:: eine Seitenansicht der Haltevorrichtung und
- Fig. 4:: eine Draufsicht auf die Haltevorrichtung.

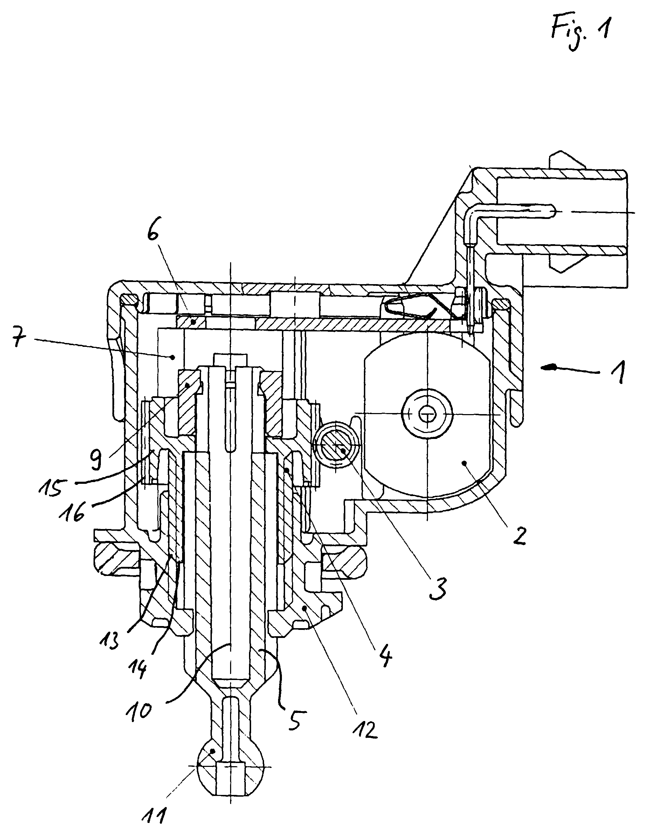

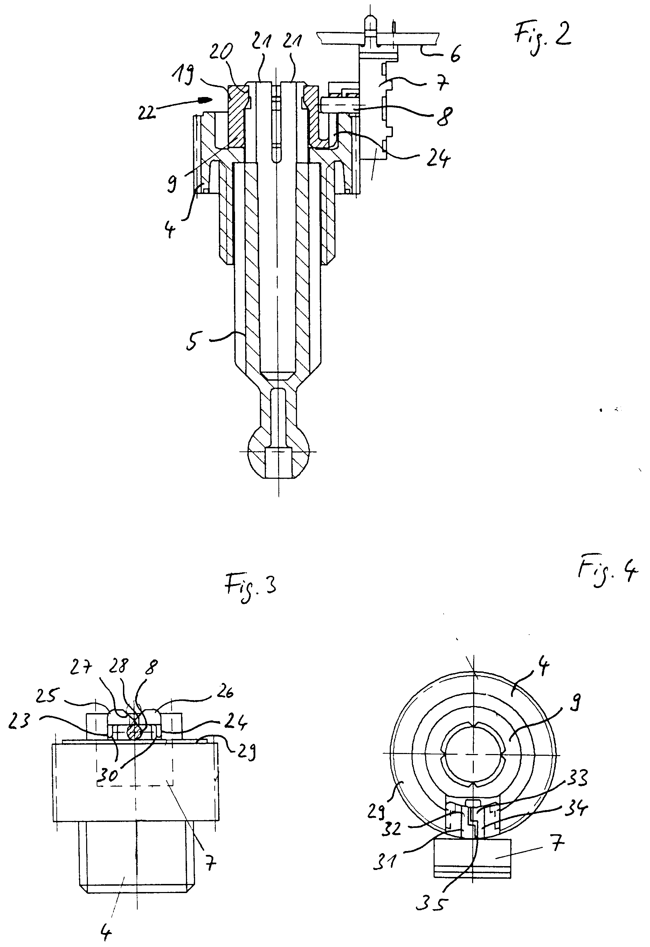

Figur 1 zeigt eine fernbetätigbare elektrische Verstellvorrichtung, die in einem aus Kunsstoff bestehenden topfförmigen Gehäuse (1) angeordnet ist. Die Verstellvorrichtung besteht im wesentlichen aus einem elektrischen Antriebselement (2), einer mit dem elektrischen Antriebselement (2) gekoppelten Schnecke (3), einem mit der Schnecke (3) gekoppelten Zahnrad (4), einem langgestreckten Achskörper (5) des Zahnrads (4) und einem an einer Leiterplatte (6) befestigten Potentiometer (7). Das Potentiometer (7) weist ein verschiebbares Abgriffelement (8) auf, das in axialer Richtung des Achskörpers (5) zusammen mit demselben bewegbar ist und in jeder Stellung durch ein an dem Achskörper (5) befestigtes Halteelement (9) sicher gehalten ist. In den Boden des topfförmigen Gehäuses (1) ist eine Öffnung eingebracht, in welcher der Achskörper (5) in Richtung einer Drehachse (10) des Zahnrads (4) verstellbar ist. Der Achskörper (5) ist als Stößel ausgebildet, der in der Öffnung drehfest angeordnet ist. An einem aus dem Boden des topfförmigen Gehäuses (1) herausragenden freien Ende des Achskörpers (5) weist dieser einen Kugelkopf (11) auf, der mit einem nicht dargestellten Reflektor eines Fahrzeugscheinwerfers in Eingriff steht und diesen um eine horizontal verlaufende Achse verschwenken kann. Zu diesem Zweck weist ein Ansatz (12) des Gehäuses (1) ein Innengewinde (13) auf, das mit einem Außengewinde (14) des Zahnrads (4) in Eingriff steht. Ein äußerer Zylinderabschnitt (15) des Zahnrads (4) weist ein im wesentlichen zu diesem senkrecht verlaufenden Außengewinde (16) auf, das mit der Schnecke (3) in Eingriff steht und über das Antriebselement (2) in Rotation versetzt werden kann. Das Zahnrad (4) ist in axialer Richtung durch ein Halteelement (9) gesichert, das an dem innerhalb des Gehäuses (1) angeordneten freien Ende des Achskörpers (5) befestigt ist.
Das Abgriffelement (8) des Potentiometers (7), das auf einer dem Achskörper (5) zugewandten Seite einer mit einer Mehrzahl von Bauelementen bestückten Leiterplatte (6) angeordnet ist, ist mittels des Halteelements (9) mit dem Achskörper (5) verbunden. Ohne Verzögerung vollzieht das Abgriffelement (8) die axiale Verschiebung des Achskörpers (5) und stellt einen Ist-Wert der aktuellen Lage des Reflektors dar, der in einer nicht gezeigten elektronischen Steuerung weiterverarbeitet wird.
Wie besonders gut aus Figur 2 und Figur 3 ersichtlich ist, besteht das Halteelement (9) aus einem kreisförmigen Ringelement (19), das innenseitig eine ringförmige Erhebung (20) aufweist, die mit federnden Nasen (21) an einem freien Ende (22) des Achskörpers (5) klemmend in Eingriff steht. Das Halteelement (9) wird nach dem Aufsetzen des Zahnrads (4) auf das freie Ende (22) des Achskörpers (5) auf dasselbe aufgesetzt und mit diesem verbunden. Von einem zahnradnahen Randbereich des Halteelements (9) erstrecken sich in axialer Richtung mit Abstand zur Mantelfläche des Ringelements (19) zwei Rastarme (23, 24), die an den Enden jeweils ein Rastelement (25) und (26) aufweisen und im wesentlichen bündig zu der gegenüberliegenden Stirnseite des Ringelements (19) abschließen.

Wie aus Figur 3 in Verbindung mit Figur 4 deutlich wird, weisen die Rastelemente (25, 26) jeweils eine Schrägfläche (27, 28) auf, die aufeinander in Richtung eines Flächenabschnitts (29) des Zahnrads (4) zulaufen. Hierdurch wird eine Einkerbung gebildet, so daß das Abgriffelement (8), nachdem die Leiterplatte (6) an dem Gehäuse (1) arretiert ist, durch Bewegung eines Montagewerkzeugs durch eine nicht dargestellte Öffnung der Leiterplatte in die Einkerbung geführt und nachfolgend unter öffnender Bewegung der Rastelemente (25, 26) quer zur Axialrichtung in das Halteelement (9) eingesetzt werden kann. Senkrecht nach unten stehende Stützstege (30) ermöglichen die Öffnungsbewegung der Rastelemente (25, 26). Zu Beginn des Einrastvorganges verbiegen sich die Rastarme (23, 24) in Richtung des Zahnrads (4), bis die Stützstege (30) an dem Flächenabschnitt (29) des Zahnrads (4) zur Anlage kommen. Nun beginnt die Öffnungsbewegung der Rastelemente (25, 26) in Querrichtung, so daß das Abgriffelement (8) eingesetzt werden kann. Zu diesem Zweck ist der Abstand zwischen der zahnradnahen Seite der Stützstege (30) und der zahnradnahen Seite der Rastelemente (25, 26) größer als der Radius des Abgriffselements (8) gewählt.
Der Abstand zwischen der zahnradnahen Seite der Rastelemente (25 und 26) und dem Flächenabschnitt (29) des Zahnrads (4) ist kleiner als der Durchmesser des Abgriffelements (8) gewählt, so daß das Abgriffelement (8) im wesentlichen spielfrei gehalten ist. Damit das Abgriffelement (8) eine ruckartige Bewegung in Querrichtung nachvollziehen kann, weisen die Schrägflächen (27) und (28) jeweils einen langen Schrägflächenabschnitt (31) und einen kurzen Schrägflächenabschnitt (32) bzw. einen langen Schrägflächenabschnitt (33) und einen kurzen Schrägflächenabschnitt (34) auf, die einen quergerichteten Versatz eines so gebildeten radial verlaufenden Spaltes (35) zwischen den Schrägflächen (27) und (28) bewirken. Es werden somit im wesentlichen zwei radial verlaufende Teilabschnitte des Spaltes (35) erzeugt, die außermittig angeordnet sind. Daher wird eine bestimmte Lage des Abgriffelements (8) in der Einrastposition vermieden, so daß auf das Abgriffelement (8) wirkende Kräfte ausgeglichen werden können. Außerdem ist das Abgriffelement (8) in seiner verrasteten Lage sicher gegen ein ungewolltes Lösen gehalten.

## Patentansprüche

1. Haltevorrichtung für ein verschiebbares Abgriffelement eines Potentiometers einer elektrischen Verstelleinrichtung zur Verstellung eines Reflektors eines Fahrzeugscheinwerfers mit einem Halteelement, das an einem freien Endabschnitt eines längsverschieblich in einem Gehäuse gelagerten Achskörpers befestigt ist, wobei das Abgriffelement durch das Halteelement an einem umlaufenden Flächenabschnitt eines Zahnrads gehalten ist, dadurch gekennzeichnet, daß das Abgriffelement (8) in dem Halteelement (9) einrastbar gehalten ist.

2. Haltevorrichtung nach Anspruch 1, dadurch gekennzeichnet, daß dem Haltelement (9) zwei Rastelemente (25, 26) zugeordnet sind, die jeweils eine radiale und tangentiale Bewegungskomponente aufweisen.

3. Haltevorrichtung nach Anspruch 1 oder 2, dadurch gekennzeichnet, daß die Rastelemente (25, 26) jeweils eine von der vom Zahnrad (4) abgekehrten Seite desselben unter einem spitzen Winkel erstreckende und auf eine Schrägfläche (28) des anderen Rastelements (26) zulaufende Schrägfläche (27) aufweisen.

4. Haltevorrichtung nach Anspruch 3, dadurch gekennzeichnet, daß die Schrägflächen (27, 28) jeweils aus mindestens zwei Schrägflächenabschnitten (31, 32, 33, 34) bestehen, wobei ein in Querrichtung versetzter Spalt (35) zwischen den Schrägflächen (27, 28) gebildet ist.

5. Haltevorrichtung nach Anspruch 3 oder 4, dadurch gekennzeichnet, daß die Schrägflächen (27, 28) jeweils aus einem langen Schrägflächenabschnitt (31, 33) und einem kurzen Schrägflächenabschnitt (32, 34) bestehen, wobei der lange Schrägflächenabschnitt (31) des ersten Rastelements (25) gegenüberliegend zu einem kurzen Schrägflächenabschnitt (34) des zweiten Rastelements (26) und ein kurzer Schrägflächenabschnitt (32) des ersten Rastelements (25) gegenüberliegend zu einem langen Schrägflächenabschnitt (33) des zweiten Rastelements (26) angeordnet ist.

6. Haltevorrichtung nach einem der Ansprüche 1 bis 5, dadurch gekennzeichnet, daß die Rastelemente (25, 26) jeweils an einem sich in axialer Richtung von einer dem Zahnrad (4) zugekehrten Stirnseite des Halteelements (9) erstreckenden Rastarm (23, 24) angeformt sind.

7. Haltevorrichtung nach einem der Ansprüche 1 bis 6, dadurch gekennzeichnet, daß dem Rastelement (25, 26) und/oder dem Rastarm (23, 24) ein in Richtung des Zahnrads (4) abragender Stützsteg (30) zugeordnet ist, wobei die Erstreckung des Stützstegs (30) in Richtung des Zahnrads (4) größer ist als der Radius des Abgriffelements (8).

8. Haltevorrichtung nach einem der Ansprüche 1 bis 7, dadurch gekennzeichnet, daß das Halteelement (9) ein Ringelement (19) aufweist, an dem in einem dem Zahnrad (4) zugekehrten Bereich die Rastarme (23, 24) angeformt sind und das klemmend auf dem freien Endabschnitt des Achskörpers (5) derart gehalten ist, daß der Abstand zwischen dem Flächenabschnitt des Zahnrads (4) und der dem Zahnrad zugekehrten Seite der Rastelemente (25, 26) kleiner ist als der Durchmesser des Abgriffelements (8).

9. Haltevorrichtung nach einem der Ansprüche 1 bis 8, dadurch gekennzeichnet, daß das Ringelement (19) in einem von dem Zahnrad (4) abweisenden Endbereich eine nach innen abstehende, ringförmig umlaufende Erhebung (20) aufweist, die mit in radialer Richtung federnden Nasen (21) des Achskörpers (5) in Eingriff steht zur axialen Lagesicherung des Zahnrads (4) auf dem Achskörper (5).

10. Haltevorrichtung nach einem der Ansprüche 1 bis 9, dadurch gekennzeichnet, daß sich die dem Zahnrad (4) zugekehrten Seiten der Rastelemente (25, 26) auf einer gemeinsamen Ebene erstrecken.
